Europäisches Patentamt

European Patent Office

Office européen des brevets

(11) Numéro de publication : **0 323 337 B1**

(12) **FASCICULE DE BREVET EUROPEEN**

(45) Date de publication du fascicule du brevet :
**10.06.92 Bulletin 92/24**

(21) Numéro de dépôt : **88403315.0**

(22) Date de dépôt : **23.12.88**

(51) Int. Cl.⁵ : **F16L 39/02**

---

(54) Dispositif de raccordement de conduites souples sur un organe quelconque et organe muni de ce dispositif.

---

(30) Priorité : **29.12.87 FR 8718319**

(43) Date de publication de la demande :
**05.07.89 Bulletin 89/27**

(45) Mention de la délivrance du brevet :
**10.06.92 Bulletin 92/24**

(84) Etats contractants désignés :
**DE ES GB IT**

(56) Documents cités :
**DE-A- 3 440 103**
**FR-A- 2 089 610**
**US-A- 3 758 138**
**US-A- 4 478 436**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Ropars, Jean-Luc**
**20 rue Ecoute s'il Pleut**
**F-78960 Voisins le Bretonneux (FR)**

(74) Mandataire : **Durand, Yves Armand Louis et al**
**Cabinet Z. Weinstein 20, Avenue de Friedland**
**F-75008 Paris (FR)**

## Description

La présente invention a essentiellement pour objet un raccordement de conduites souples sur un organe quelconque, ce raccordement pouvant être avantageusement monté sur l'organe à l'aide d'un robot.

L'invention vise également un organe, tel que par exemple un moteur de véhicule, équipé de ce raccordement.

On sait que, dans l'industrie, il convient souvent de réaliser des liaisons étanches aux fluides à l'aide de tuyaux souples reliant entre eux divers éléments.

Ainsi dans le cas d'un moteur de véhicule automobile, il convient de relier par des conduites souples divers organes dans lesquels circule un fluide de refroidissement et tels que le moteur, le radiateur, le vase d'exansion, le système de climatisation, etc...

Les conduites souples reliant ces organes sont généralement montées par leurs extrémités sur des embouts mâles, ce après quoi on utilise des colliers pour serrer les conduites sur les embouts.

Toutefois, cette solution demeure artisanale, c'est-à-dire exige un montage manuel avec bien sûr un contrôle de positionnement du tuyau sur l'embout ce qui est délicat, sans parler du fait que le serrage du collier peut être imprécis. Dès lors, non seulement le montage peut s'avérer non satisfaisant et à la longue défectueux, mais représente aussi un certain coût résultant de la main d'oeuvre.

On connaît aussi, d'après le document DE-A-3 440 103 un système de raccordement de conduites qui sont emmanchées sur des raccords solidarisés par des éléments en forme de platine, mais ce système à pièces multiples est compliqué et délicat à monter.

Dans le document FR-A-2 089 610, il est décrit un raccord pour tuyaux de matière plastique comprenant une plaque apte à saisir, sous l'effet de la pression d'un écrou, des parties renflées des tuyaux, mais un tel raccord peut détériorer les tuyaux, ne peut garantir l'étanchéité et ne peut pas être monté par un robot en raison de l'utilisation d'un écrou.

Aussi la présente invention a pour but de remédier à ces inconvénients en proposant un raccordement peu coûteux et qui peut être monté rapidement et précisément à l'aide d'un robot.

A cet effet l'invention a pour objet un raccordement de conduites souples sur un organe muni d'alésages devant communiquer avec ces conduites qui sont solidaires d'un élément commun qui les rassemble et permet leur verrouillage simultané et étanche sur ledit organe, l'élément commun étant constitué par une platine munie d'orifices, certains au moins d'entre ces orifices comportant une partie tubulaire, recevant les conduites dont les extrémités possèdent des collets susceptibles de prendre appui de façon étanche sur la platine et dans des chambrages ménagés dans l'organe, lors de la fixation de la platine sur l'organe.

Selon une autre caractéristique, ce raccordement est caractérisé par une rondelle ou un insert tubulaire avec collerette agencée au niveau des extrémités précitées des conduites, la rondelle ou la collerette étant noyée dans le collet de la conduite.

Suivant une autre caractéristique, la fixation de la platine sur l'organe est réalisée à l'aide de moyens de vissage, de clippage ou de fixation élastique.

Selon encore une autre caractéristique, les moyens de clippage sont constitués par au moins une patte et un épaulement portés respectivement par la platine et l'organe ou l'inverse, ou encore par des pattes d'accrochage venant de matière avec la platine et en prise avec des dentures prévues sur l'organe.

Les moyens de fixation élastique peuvent être constitués par au moins un ressort accroché sur l'organe et exercent un effort de compression sur la platine pour assurer l'appui étanche des collets des conduites sur ledit organe.

L'invention vise encore un raccordement de conduites souples sur un organe muni d'alésages devant communiquer avec ces conduites qui sont solidaires d'un élément commun qui les rassemble et permet leur verrouillage simultané et étanche sur ledit organe, caractérisé en ce que l'élément commun est constitué par un embout en matière plastique comportant autant de parties tubulaires mâles qu'il y a de conduites communiquant avec ces parties, lesquelles parties tubulaires coopèrent chacune de manière étanche, grâce à au moins un joint torique, avec un alésage de l'organe, tandis qu'un moyen de verrouillage unique de toutes les parties tubulaires de l'embout sur l'organe est prévu.

Le moyen de verrouillage unique précité est constitué par un circlips, jonc ou analogue logé dans une gorge ménagée dans l'une des parties tubulaires et dans l'un des alésages recevant cette partie, ou encore par des pattes élastiques se clipppant sur des ergots appartenant à l'organe.

Ce raccordement est encore caractérisé en ce que l'embout est constitué par un voile de matière plastique reliant toutes les parties tubulaires et s'étendant suivant une direction sensiblement parallèle à l'axe de ces parties tubulaires.

Mais d'autres avantages et caractéristiques de l'invention apparaîtront mieux dans la description détaillée qui suit et se réfère aux dessins annexés. donnés uniquement à titre d'exemple et dans lesquels :

La figure 1 est une vue extérieure élévation de la partie d'un organe recevant le dispositif de raccordement selon cette invention ;

Les figures 2 et 3 sont des vues en coupe respectivement suivant les lignes II-II et III-III de la figure 1 ;

La figure 4 est une vue en coupe similaire à la figure 2, mais montrant un autre mode de réalisation de dispositif conforme à cette invention ;

La figure 5 est une vue en coupe illustrant un mode de réalisation particulier de clippage du dispositif de raccordement sur l'organe ;

La figure 6 est une vue en coupe illustrant une fixation particulière du dispositif de raccordement sur l'organe, à l'aide d'un moyen élastique ;

La figure 7 est encore une vue en coupe illustrant que variante de fixation du dispositif de raccordement sur l'organe ;

La figure 8 est une vue en coupe d'un autre mode de réalisation de dispositif de raccordement selon cette invention ;

La figure 9 est une vue en coupe montrant un dispositif de raccordement similaire à celui de la figure 8, mais utilisant d'autres moyens de montage du dispositif de raccordement sur l'organe ; et

La figure 10 est une vue en plan illustrant plus particulièrement une liaison possible entre les diverses parties tubulaires du dispositif de raccordement montré sur les figures 8 et 9.

Comme on le voit sur les figures, un dispositif de raccordement selon cette invention permet la connexion de plusieurs conduites ou tuyaux souples 1 sur un organe 2 muni d'alésages 3 devant communiquer avec les conduites ou tuyaux 1.

Conformément à l'invention, toutes les conduites sont solidaires d'un élément commun 4 qui les rassemble et permet leur verrouillage simultané et étanche sur l'organe 2 qui peut être un moteur de véhicule, un radiateur, un appareil de climatisation, etc...

En d'autres termes, grâce à cette invention, on regroupe plusieurs conduites souples par leurs extrémités sur un même élément, ce qui permet avantageusement de connecter, à l'aide d'un robot par exemple, un faisceau de conduites entre deux organes tels qu'un moteur et un radiateur de façon à permettre la circulation d'un fluide de refroidissement.

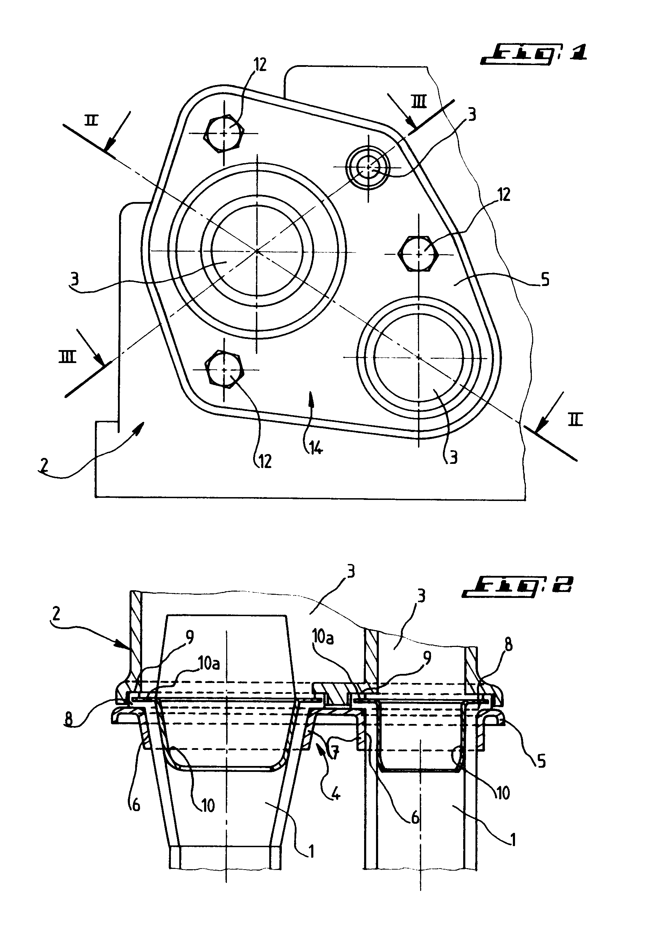

Suivant l'exemple de réalisation visible sur les figures 1 à 7, l'élément commun ou de regroupement 4 des conduites souples 1 est constitué par une platine de connexion 5 munie d'orifices tubulaires 6 recevant les conduites souples 1. Plus précisément, les orifices tubulaires 6, se composent chacun, comme on le voit bien sur les figures 1 à 7, d'un orifice proprement dit qui est bordé, c'est-à-dire qui comporte une partie tubulaire 7.

Les extrémités des conduites souples 1 possèdent des collets 8 qui, comme on le voit bien sur les figures, peuvent prendre appui de façon étanche sur la platine 5 et dans des chambrages 9 ménagés dans l'organe 2, lorsque l'on fixe la platine 5 sur ledit organe.

On comprend donc que les conduites 1 peuvent être facilement enfilées dans les orifices tubulaires ou bordés 6 de la platine 5 qui applique les collets 8 sur l'organe 2 que l'on veut connecter, et cela de façon à garantir l'étanchéité du circuit de fluide.

Comme on le voit sur les figures 1 à 5, un insert tubulaire 10 où une rondelle 11 est prévue au niveau des extrémités des conduites souples 1.

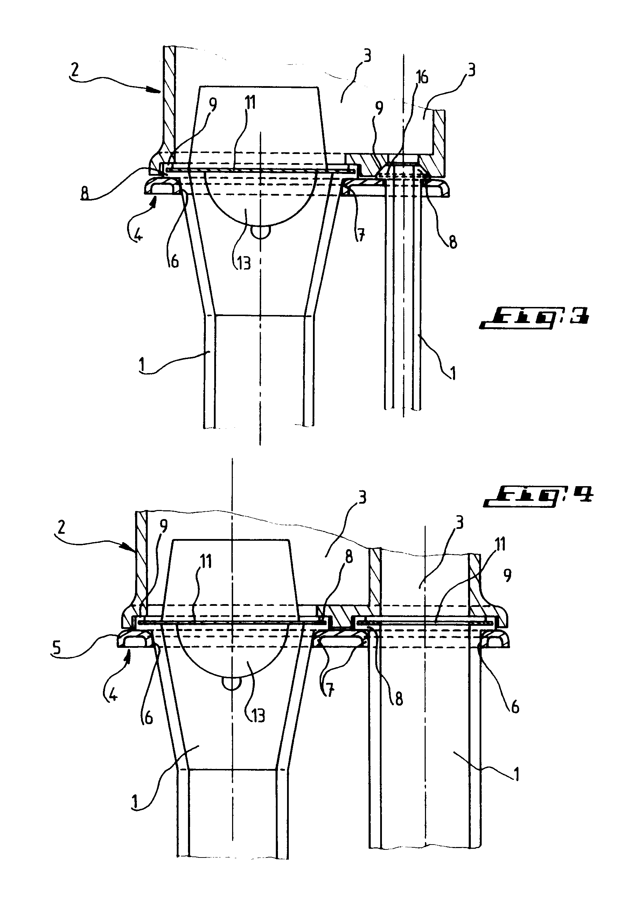

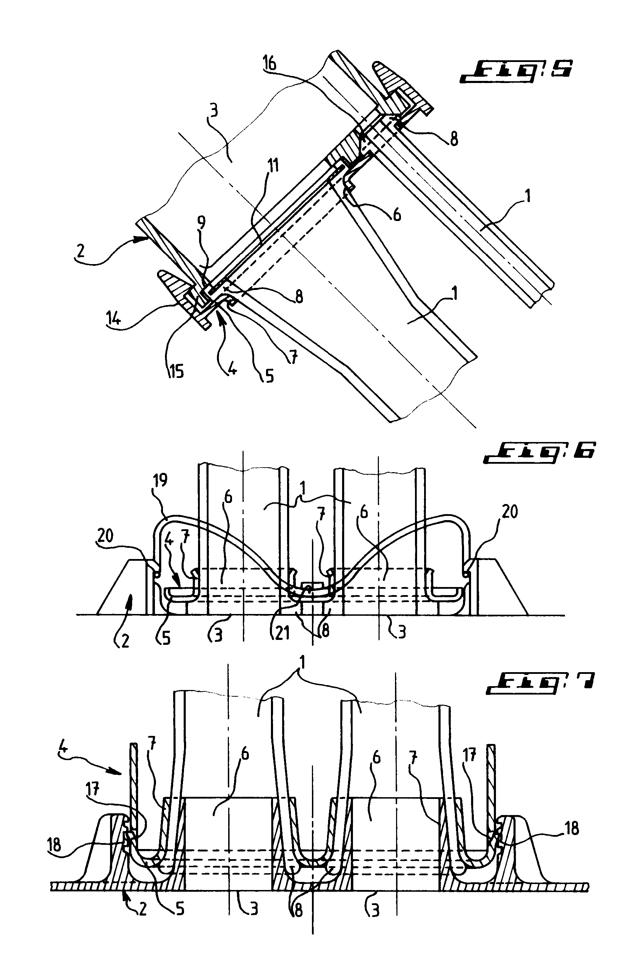

L'insert 10 comporte une collerette 10a qui est noyée dans le collet 8 de l'extrémité de la conduite 1, comme on le voit bien sur la figure 2. De même, la périphérie de la rondelle 11 est noyée dans le collet 8 de la conduite souple 1, comme on le voit sur les figures 3 à 5.

Le rôle de l'insert tubulaire 10 ou de la rondelle 11 est de renforcer le verrouillage de la platine 5 sur l'organe 2 et d'assurer par conséquent une meilleure tenue aux sollicitations du raccord.

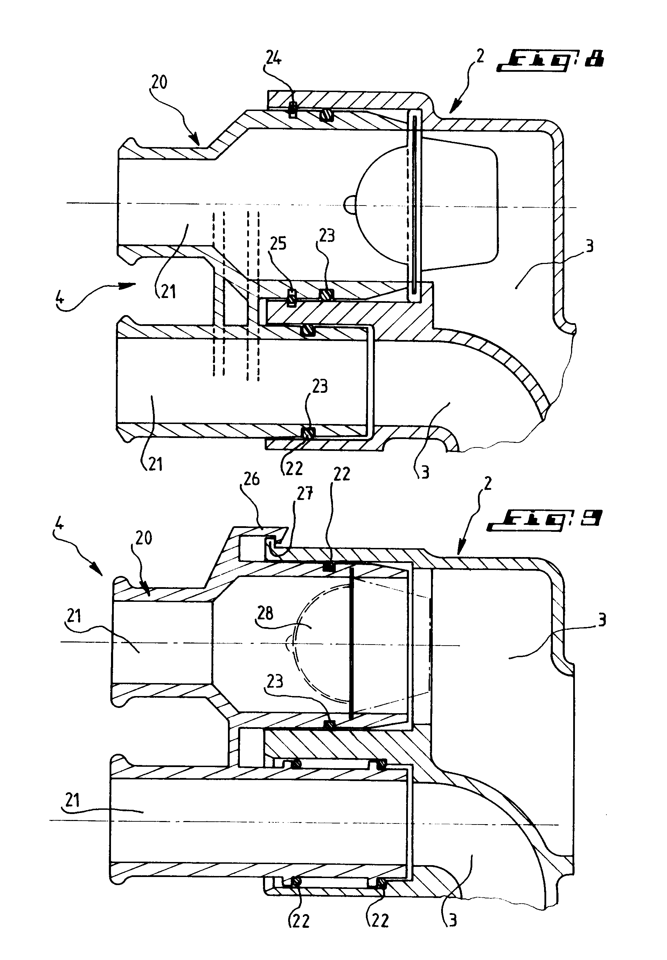

La rondelle 11 peut constituer la collerette d'un calorstat montré schématiquement en 13 sur les figures 3 et 4.

La fixation de la platine 5 sur l'organe 2 peut être réalisée à l'aide de tout moyen approprié et tel qu'un moyen de vissage, de clippage ou de fixation élastique.

C'est ainsi que l'on a montré en 12 sur la figure 1 des vis permettant cette fixation.

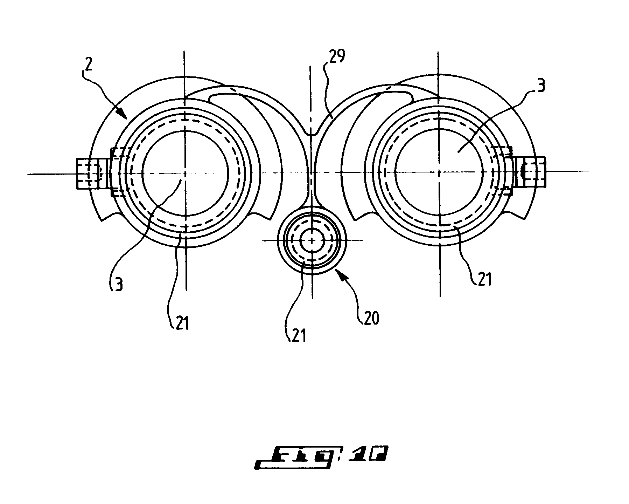

Comme on le voit sur la figure 5, la fixation peut être encore réalisée par une patte 14 en forme de doigt solidaire de la périphérie de la platine 5 et coopérant avec un épaulement 15 porté par l'organe 2, étant entendu que la disposition inverse pourrait être prévue sans sortir du cadre de l'invention. On comprend qu'une telle fixation assure non seulement l'étanchéité du raccordement, mais permet aussi le centrage de l'ensemble platine 5, conduites 1 et insert 10 ou rondelle 11 si ces deux derniers éléments sont prévus.

A cet égard, on notera que le centrage de l'ensemble précité peut être facilité par des chanfreins repérés en 16 sur la figure 3 et constituant des portées coniques au niveau du chambrage 9 et de l'extrémité des conduites souples 1. On retrouve le même genre d'emmanchement par portées coniques 16 sur la réalisation de la figure 5.

Suivant la réalisation visible sur la figure 7, la fixation étanche de la platine 5 sur l'organe 2 peut être assurée par des pattes d'accrochage 17 venant de matière avec la platine 5 et coopérant avec des dentures 18 de l'organe 2.

Suivant encore une autre réalisation visible sur la figure 6, la fixation de la platine 5 sur l'organe 2 peut être assurée par un ressort 19 accroché par ses extrémités sur l'organe 2, comme on le voit en 20, et exerçant un effort de compression sur la platine 5. On voit en 21 sur la figure 6 la partie centrale du ressort 19 qui prend appui sur la platine 5 pour l'appliquer de façon étanche par l'intermédiaire des collets 8 contre l'organe 2.

Suivant l'exemple de réalisation visible sur les figures 8 et 9, l'élément 4 regroupant les conduites souples (non représentées) est constitué par un embout 20 en matière plastique comportant autant de parties tubulaires 21 qu'il y a de conduites, lesquelles conduites sont assemblées de manière indémontable, par collage ou surmoulage par exemple, sur les parties tubulaires 21.

Ces parties tubulaires 21 constituent des éléments mâles introduits dans les alésages 3 de l'organe 2, lesquels alésages forment eux aussi des parties tubulaires comme on le voit bien sur les figures 8 et 9.

L'étanchéité est assurée par un ou plusieurs joints toriques 22 logés dans une gorge 23 pratiquée dans les parties tubulaires 21 de l'embout 20. De tels joints sont prévus sur chaque partie tubulaire 21 de l'embout.

Par contre l'embout 20 comporte un moyen de verrouillage unique et commun à l'ensemble des conduites et des parties tubulaires 21.

Comme on le voit sur la figure 8, ce moyen de verrouillage peut être constitué par un circlips ou un jonc 24 logé dans une gorge 25 ménagée dans l'une des parties tubulaires 21 et dans l'une des parties tubulaires de l'organe 2 formant alésage 3.

Comme on le voit sur la figure 9, au lieu d'utiliser un jonc ou un circlips, l'embout 20 peut être retenu sur l'organe 2 par des pattes élastiques 26 solidaires des parties tubulaires 21 de l'embout 20 et s'accrochant sur des ergots 27 appartenant à l'organe 2. On observera que, sur la figure 9, l'une des parties tubulaires 21 de l'embout 20 est surmoulée sur un calorstat 28, ce qui supprime une étanchéité. Par contre, sur l'autre partie tubulaire 21 de l'embout 20, à savoir celle ne portant pas les pattes 26, un deuxième joint torique, tel que 22, est ajouté et permet le guidage et l'étanchéité.

Comme on le voit sur la figure 10, la liaison entre les différentes parties tubulaires 21 de l'embout 20 est réalisée par un voile de matière plastique 29 qui s'étend suivant une direction sensiblement parallèle à l'axe de ces parties tubulaires qui sont, suivant l'exemple représenté, au nombre de trois, de sorte que l'embout 20 permet le regroupement de trois conduites souples telles que 1.

Un tel voile de matière 29 possède bien entendu une certaine souplesse, ce qui facilite l'adaptation et le montage des parties tubulaires de l'embout et donc des conduites sur l'organe 2.

## Revendications

1. Raccordement de conduites souples (1) sur un organe (2) muni d'alésages (3) devant communiquer avec ces conduites qui sont solidaires d'un élément commun (4) qui les rassemble et permet leur verrouillage simultané et étanche sur ledit organe, l'élément commun (4) étant constitué par une platine (5) munie d'orifices, certains au moins d'entre ces orifices comportant une partie tubulaire (6), recevant les conduites (1) dont les extrémités possèdent des collets (8) susceptibles de prendre appui de façon étanche sur la platine (5) et dans des chambrages (9) ménagés dans l'organe (2), lors de la fixation de la platine sur l'organe.

2. Raccordement selon la revendication 1, caractérisé par une rondelle (11) ou un insert tubulaire (10) avec collerette (10a) agencée au niveau des extrémités précitées des conduites (1), la rondelle ou la collerette étant noyée dans le collet (8) de la conduite.

3. Raccordement selon la revendication 1 ou 2, caractérisé en ce que la fixation de la platine (5) sur l'organe (2) est réalisée à l'aide de moyens de vissage, de clippage ou de fixation élastique.

4. Raccordement selon la revendication 3, caractérisé en ce que les moyens de clippage sont constitués par au moins une patte (14) et un épaulement (15) portés respectivement par la platine (5) et l'organe (2) ou l'inverse, ou encore par des pattes d'accrochage (17) venant de matière avec la platine (5) et en prise avec des dentures (18) prévues sur l'organe (2).

5. Raccordement selon la revendication 3, caractérisé en ce que les moyens de fixation élastique sont constitués par au moins un ressort (19) accroché sur l'organe (2) et exerçant un effort de compression sur la platine (5) pour assurer l'appui étanche des collets (8) des conduites sur ledit organe.

6. Raccordement de raccordement de conduites souples (1) sur un organe (2) muni d'alésages (3) devant communiquer avec ces conduites qui sont solidaires d'un élément commun (4) qui les rassemble et permet leur verrouillage simultané et étanche sur ledit organe, caractérisé en ce que l'élément commun (4) est constitué par un embout (20) en matière plastique comportant autant de parties tubulaires mâles (21) qu'il y a de conduites communiquant avec ces parties, lesquelles parties tubulaires coopèrent chacune de manière étanche, grâce à au moins un joint torique (22), avec un alésage (3) de l'organe (2), tandis qu'un moyen de verrouillage unique de toutes les parties tubulaires de l'embout sur l'organe est prévu.

7. Raccordement selon la revendication 6, caractérisé en ce que le moyen de verrouillage unique précité est constitué par un circlips, jonc ou analogue (24) logé dans une gorge (25) ménagée dans l'une des parties tubulaires (21) et dans l'un des alésages (3) recevant cette partie, ou encore par des pattes élastiques (26) se clippant sur des ergots (27) appartenant à l'organe (2).

8. Raccordement selon la revendication 6 ou 7, caractérisé en ce que l'embout est constitué par un voile de matière plastique (29) reliant toutes les parties tubulaires et s'étendant suivant une direction sensiblement parallèle à l'axe de ces parties tubulaires.

9. Organe, tel que moteur de véhicule, équipé d'un raccordement selon l'une des revendications 1 à 8.

## Patentansprüche

1. Verbindung von nachgiebigen Leitungen (1) an einem mit in Verbindung mit diesen Leitungen zu setzenden Bohrungen (3) versehenen Glied (2), welche mit einem gemeinsamen Element (4) fest verbunden sind, das sie zusammenbringt und deren gleichzeitige und dichte Verriegelung an dem besagten Glied gestattet, wobei das gemeinsame Element (4) durch eine mit Oeffnungen versehene Platte (5) gebildet ist, wobei wenigstens einige unter diesen Oeffnungen einen rohrförmigen Teil (6) aufweisen, welcher die Leitungen (1) aufnimmt, deren Enden Bunde (8) besitzen, die fähig sind, sich an der Platte (5) und in in dem Glied (2) gebildeten Einsenkungen (9), während der Befestigung der Platte an dem Glied, abzustützen.

2. Verbindung nach. Anspruch 1, gekennzeichnet, durch eine Unterlegscheibe (11) oder einen rohrförmigen Einsatz (10) mit im Bereich der vorgenannten Enden der Leitungen (1) angeordneten Flansch (10a), wobei die Unterlegscheibe oder der Flansch in dem Bund (8) der Leitung eingebettet ist.

3. Verbindung nach Anspruch 1 oder 2, dadurch gekennzeichnet, dass die Befestigung der Platte (5) an dem Glied (2) mit Hilfe von Schraub-, Klemm- oder elastischen Befestigungsmitteln durchgeführt wird.

4. Verbindung nach Anspruch 3, dadurch gekennzeichnet, dass die Klemmmittel durch wenigstens einen Ansatz (14) und eine Schulter (15), die jeweils von der Platte (5) und dem Glied (2) oder umgekehrt getragen werden oder noch durch Anhängsel (17), die einstückig mit der Platte (5) hergestellt sind und mit an dem Glied (2) vorgesehenen Zähnen (18) im Eingriff stehen, gebildet sind.

5. Verbindung nach Anspruch 3, dadurch gekennzeichnet, dass die elastischen Befestigungsmittel durch wenigstens eine an dem Glied (2) angehakte Feder gebildet sind, welche eine Druckkraft auf die Platte (5) ausübt, um eine dichte Abstützung der Bunde (8) der Leitungen an dem besagten Glied zu gewährleisten.

6. Verbindung von nachgiebigen Leitungen (1) an einem mit, in Verbindung mit diesen Leitungen zu setzenden Bohrungen (3) versehenen Glied (2), die mit einem gemeinsamen Element (4), das sie zusammenbringt und deren gleichzeitige und dichte Verriegelung an dem besagten Glied gestattet, fest verbunden sind, dadurch gekennzeichnet, dass das gemeinsame Element (4) durch ein Ansatzstück (20) aus Kunststoff gebildet ist, welches soviele einsteckbare rohrförmige Teile (21), wie es mit diesen Teilen im Verbindung stehende Leitungen gibt, welche rohrförmige Teile jeweils dicht, dank wenigstens einem Runddichtring (22), mit einer Bohrung (3) des Gliedes (2) zusammenwirken, während ein einziges Mittel zur Verriegelung sämtlicher rohrförmigen Teile des Ansatzstückes an dem Glied vorgesehen ist.

7. Verbindung nach Anspruch 6, dadurch gekennzeichnet, dass das vorgenannte einziege Verriegelungsmittel durch einen Sicherungsbügel, Sprengring oder dergleichen (24) gebildet ist, welcher in einer in einem der rohrförmigen Teile (21) und in einem der diesen Teil aufnehmenden Bohrungen (3) gebildeten Nut (25) eingesetzt ist oder auch durch sich an zu dem Glied (2) gehörenden Nasen (27) verklemmende elastische Anhängsel (26) gebildet sind.

8. Verbindung nach Anspruch 6 oder 7, dadurch gekennzeichnet, dass das Ansatzstück durch eine sämtliche rohrförmige Teile verbindende und sich entlang einer im wesentlichen zur Achse dieser rohrförmigen Teile parallelen Richtung erstreckende Kunststoffschale (29) gebildet ist.

9. Mit einer Verbindung gemäss einem der Ansprüche 1 bis 8 ausgestattetes Glied, wie ein Fahrzeugmotor.

## Claims

1. Connection of flexible ducts (1) onto a member (2) provided with bores (3) adapted to communicate with these ducts which are made fast to a common element (4) which is gathering them and allows their simultaneous and fluid-tight locking onto the said member, the common element (4) being constituted by a plate (5) provided with orifices, at least some among these orifices comprising a tubular portion (6) receiving the ducts (1) the ends of which have collars (8) susceptible of bearing in sealing relationship onto the plate (5) and in recesses (9) formed in the member (2) upon the fastening of the plate onto the member.

2. Connection according to claim 1, characterized by a washer (11) or a tubular insert (10) with a flange (10:) arranged at the level of the aforesaid ends of the ducts (1), the washer or the collar being embedded into the collar (8) of the duct.

3. Connection according to claim 1 or 2, characterized in that the fastening of the plate (5) onto the member (2) is carried out with the assistance of screwing, clipping or elastic fastening means.

4. Connection according to claim 3, characterized in that the clipping means are constituted by at least one lug (14) and a shoulder (15) carried by the plate (5) and the member (2), respectively, or reversely or also by catching lugs (17) made in one piece with the plate (5) and engaging teeth (18) provided on the member (2).

5. Connection according to claim 3, characterized in that the elastic fastening means are constituted by at least one spring (19) hooked onto the member (2) and exerting a compression force upon the plate (5) to ensure the fluid-tight bearing of the collars (8) of the ducts onto the said member.

6. Connection of flexible ducts (1) onto a member (2) provided with bores (3) adapted to communicate with these ducts which are made fast to a common element (4) which is gathering them and enables their simultaneous and fluid-tight locking onto the said member, characterized in that the common element (4) is ccnstituted by an end part (20) of plastics material comprising as many male tubular portions (21) as there are ducts communicating with these portions, which tubular portions are co-operating each one in sealing relationship owing to at least one O-ring (22) with one bore (3) of the member (2) whereas a single means for locking all the tubular portions of the end part onto the member is provided.

7. Connection according to claim 6, characterized in that the aforesaid single locking means is constituted by a circlips, split ring or the like (24) accomodated in a groove (25) formed in one of the tubular portions (21) and in one of the bores (3) receiving this portion or also by elastic lugs (26) clipping onto snugs (27) belonging to the member (2).

8. Connection according to claim 6 or 7, characterized in that the end part is constituted by a web of plastics material (29) connecting all the tubular portions and extending in a direction substantially parallel to the axis of these tubular portions.

9. Member such as a vehicle engine fitted with a connection according to one of claims 1 to 8.

Fig. 1

Fig. 2

Fig. 3

Fig. 4

Fig. 5

Fig. 6

Fig. 7

Fig. 8

Fig. 9

Fig. 10